# EUROPÄISCHE PATENTANMELDUNG

(11) **EP 0 908 539 A2**
(43) Veröffentlichungstag der Anmeldung: **14.04.1999**
(21) Anmeldenummer: 98112149.4
(22) Anmeldetag: 27.06.1998
(51) Int. Cl.: C25D 7/10, F16C 33/12

(54) **Schichtverbundwerkstoff für Gleitelemente sowie Verfahren zur Herstellung von Lagerschalen**

(30) Priorität: 05.07.1997 DE 19728777
(71) Anmelder: GLYCO-METALL-WERKE Glyco B.V. & Co. KG, 65201 Wiesbaden (DE)
(72) Erfinder: Niegel, Fritz, 65375 Oestrich-Winkel (DE); Gruenthaler, Karl-Heinz, 61250 Usingen (DE); Lucchetti, Werner, 65396 Walluf (DE); Huhn, Hans-Ulrich, 65388 Schlangenbad-Wambach (DE)

(57) **Zusammenfassung**

Es wird ein bleifreier Schichtverbundwerkstoff beschrieben, der mindestens die positiven Eigenschaften bezüglich Zuverlässigkeit, Notlaufeigenschaften und mechanischer Belastbarkeit aufweist, wie herkömmliche Blei-Ternärlagerwerkstoffe. Der Schichtverbundwerkstoff ist dadurch gekennzeichnet, daß die Lagermetallschicht aus einer bleifreien Kupferlegierung mit einem Kupferanteil von 50 - 95 Gew.-% besteht und daß die Gleitschicht aus einer bleifreien, Zinn und Kupfer aufweisenden Legierung besteht, wobei der Kupferanteil 3 - 20 Gew.-% und der Zinnanteil 70 - 97 Gew.-% betragt. Es wird auch ein Verfahren zur Herstellung entsprechender Lagerschalen beschrieben.

## Beschreibung

Die Erfindung betrifft einen Schichtverbundwerkstoff für Gleitlager mit einer Ternärschicht, einer Lagermetallschicht, einer Diffusionssperrschicht und einer galvanisch aufgebrachten Gleitschicht. Die Erfindung bezieht sich auch auf ein Herstellungverfahren von Lagerschalen.

Schichtverbundwerkstoffe mit dem Aufbau Stahlrücken/Bleibronze/Gleitschicht aus Blei-Zinn-Kupfer haben sich durch hohe Zuverlässigkeit und mechanische Belastbarkeit bewährt. Solche Schichtverbundwerkstoffe werden beispielsweise in Glyco Ingenieurberichte 1/91 beschrieben.

Ein typischer Vertreter dieser Werkstoffgruppen hat folgenden Aufbau:
Stahl
CuPb22Sn Lagermetall
Nickel-Damm
PbSn10Cu2 Gleitschicht.

Insbesondere die galvanische Gleitschicht ist ein multifunktionaler Werkstoff. die unter anderem folgende Aufgaben übernimmt:
- Einbettfähigkeit für Fremdpartikel
- Einlauf bzw. Anpassung der Gleitpartner
- Korrosionsschutz für die Bleibronze
- Notlaufeigenschaften im Fall von Ölmangel.

Das Lagermetall beinhaltet ebenfalls gewisse Notlaufreserven für den Fall, daß die Gleitschicht völlig abgetragen ist.

Diese seit Jahrzehnten bewährten Lagerkonzepte beinhalten aber heute noch Bleianteile im Lagermetall und in der Gleitschicht. Dies ist aus Gründen der Umweltrelevanz von Schwermetallen unbefriedigend.

Bleifreie Gleitlager werden zur Zeit nur auf Aluminiumbasis hergestellt. Es sind vorzugsweise Zweistofflager mit einer Aluminiumlegierung auf Stahl im Einsatz. Legierungselemente im Aluminium sind vorzugsweise Zinn, Silizium, Nickel und Kupfer. Nachteile dieser Werkstoffgruppen sind die geringe Dauerfestigkeit, geringe Kerbempfindlichkeit, geringe Warmfestigkeit, ungenügende Einbettfähigkeit und schlechtere Wärmeleitfähigkeit.

Die galvanische Abscheidung erfolgte bisher hauptsächlich mit fluoroborathaltigen Bädern. Die Kupferabscheidung konnte in diesen Bädern nur bis zu 2 Vol.-% durchgeführt werden, während in zyanidischen Bädern Abscheideraten des Kupfers von bis zu 20 Vol.-% erreicht werden konnten. Hier hat sich allerdings herausgestellt, daß die Schicht äußerst spröde ist und insofern keine großie Haltbarkeit aufweist.

Aus der DE-OS 27 22 144 ist die Verwendung einer Legierung mit mehr als 6 bis 10 Gew.-% Kupfer, 10 bis 20 Gew.-% Zinn, Rest Blei als Weichmetallagerlegierung für Mehrschichtgleitlager bekannt. Diese Legierung kann unter anderem durch galvanische Abscheidung aufgebracht werden, wobei eine Nickelzwischenschicht als Diffusionssperre vorgesehen ist. Diese bekannte Legierung, die mit herkömmlichen Elektrolytbädern hergestellt wird, zeigt jedoch eine grobe Verteilung des Zinns.

In "galvanisches Abscheiden von Zinn-Blei aus Fluoroborat und fluoroborafreien Elektrolyten" von H. van der Heijden in "Metalloberfläche" 39 (1985) 9, Seite 317-320 wird das Beschichten von Elektronikkomponenten beschrieben. Es hat sich gezeigt, daß Zinn und Blei in verschiedenen organischen Sulfonsäuren mit der allgemeinen Formel RSO₃H gut lösbar sind, wobei R eine Alkylgruppe darstellt. Die Sulfonsäuren werden als völlig stabil während der Elektrolyse beschrieben. Die Anwendung derartiger fluoroboratfreier Bäder für die galvanische Beschichtung von Gleitelementen wird ebenso erwähnt, wie die Angabe von geeigneten und für die Herstellung von Gleitelementen notwendigen Zusatzstoffen.

Aus der DE 39 02 042 A1 sind wässrige, saure Lösungen für die elektrolytische Abscheidung von Zinn und/oder Blei-Zinn-Legierungen bekannt. Diese binären Galvanisierbäder werden als Korrosionsschutz: z.B. für Leiterplatten und Batterien eingesetzt, wobei eine relativ weiche Schicht abgeschieden wird, die nicht verschleißfest und somit auch nicht für Gleitelemente einsetzbar ist. Neben Metallsalzen, Inhibitoren und freier Alkansulfonsäuren weisen diese bekannten Galvanisierbäder Glanzbildner auf, die den Einsatz dieser Bäder beispielsweise als Ternärbäder unmöglich machen. Es hat sich gezeigt, daß bei einer Zugabe von beispielweise Kupfersalzen jeweils nur maximal 1 % Kupfer abgeschieden werden kann, weil die Badzusammensetzung im wesentlichen auf das Zinn abgestimmt ist.

In der JP 02/93096A (Pat. Abstract of Japan, C-732, Vol. 14/No. 294) wird ein Vefahren zur Herstellung von Gleitelementen beschrieben, bei dem die Laufschicht aus Pb-Sn-Cu auf das vorgefertigte Halbzeug galvanisch aufgebracht wird. Hierzu wird zwar ein fluoroboratfreier Elektrolyt ohne Glanzbildner mit freier Alkylsulfonsäure sowie nichtionischen Netzmitteln verwendet. Mit diesen bekannten Galvanisierbadern wird aber ebenfalls nur eine grobe Abscheidung des Zinns erreicht, wobei der Schichtaufbau meist unregelmäßig ist. Die an Gleitlager gestellten hohen Anforderungen werden nicht zur vollen Zufriedenheit erfüllt.

In der DE 195 45 427 werden zur Herstellung von Laufschichten aus Blei-Zinn-Kupfer ebenfalls fluoroboratfreie Galvanisierbäder beschrieben, die ein Carbonsäure aufweisendes Kornverfeinerungsmittel und ein Fettsäureglykolester enthalten. Es wird dadurch eine feinkristalline Abscheidung des Zinns in vollständig homogener Verteilung erzielt, wobei eine Kupferabscheidung von 2 bis 16 Gew.-% erzielt wird.

In der älteren deutschen Anmeldung DE 196 22 166 werden Ternärschichten mit Hartteilchen beschrieben, wobei für die Laufschicht fluoroboratfreie Galvanisierbäder unter Einsatz von Alkylsulfonsäure verwendet werden, um eine vollständig homogene Verteilung der Hartteilchen im Matrixmaterial zu erhalten. Neben bleihaltigen Gleitschichten werden mittels dieser alkylsulfonsauren Bäder auch bleifreie Schichten aus SnCuNi, Sn, SnCu und CuSn aufgebracht. Es hat sich jedoch gezeigt, daß mit diesen bleifreien Schichten zwar Kupfergehalte bis zu 16 % erreicht werden können, diese Schichten zeigen jedoch noch keine zufriedenstellenden Eigenschaften hinsichtlich mechanischer Belastbarkeit und Dauerfestigkeit.

Die Aufgabe der Erfindung besteht deshalb darin, einen bleifreien Schichtverbundwerkstoff zu schaffen, der mindestens die positiven Eigenschaften bezüglich Zuverlässigkeit, Notlaufeigenschaften und mechanischer Belastbarkeit aufweist, wie herkömmliche Blei-Ternärlagerwerkstoffe. Es ist auch Aufgabe der Erfindung, ein Verfahren zur Herstellung von Lagerschalen bereitzustellen.

Diese Aufgabe wird hinsichtlich des Schichtverbundwerkstoffes dadurch gelöst, daß die Lagermetallschicht aus einer bleifreien Kupferlegierung mit einem Kupferanteil von 50-95 Gew.-% besteht und daß die Gleitschicht aus einer bleifreien, Zinn und Kupfer aufweisenden Legierung besteht, wobei der Kupferanteil 3 bis 20 Gew.-% und der Zinnanteil 70-97 Gew.-% beträgt.

Bleifreie Kupferlegierungen sind aus der Buchsenfertigung bereits bekannt (siehe "Lagerwerkstoffe auf Kupferbasis" Deutsches Kupferinstitut e.V. 1961) und haben sich dort bewährt. Allerdings sind Buchsen geringeren mechanischen Belastungen und geringeren Drehzahlen ausgesetzt, als Lagerschalen. Aus diesem Grund hat man bisher den Einsatz dieser Werkstoffe für Lagerschalen nicht in Betracht gezogen. Es hat sich jedoch herausgestellt, daß solche Kupferwerkstoffe dann für Lagerschalen geeignet sind, wenn zusätzlich eine Gleitschicht aufgebracht wird.

Da auch bei der Gleitschicht das Erfordernis an Bleifreiheit erfüllt werden sollte, konnte nicht jedes beliebige Gleitschichtmaterial in Verbindung mit dem bleifreien Lagermaterial eingesetzt werden. Es hat sich herausgestellt, daß Zinn-Kupfer-Legierungen dann die besten Ergebnisse hinsichtlich Freßbeständigkeit, Belastungs- und Einbettfähigkeit zeigen, wenn der Kupferanteil bei 5 bis 20 % liegt.

Vorzugsweise besteht die Lagermetallschicht aus einer Kupfer-Aluminium-, Kupfer-Zinn-, Kupfer-Zink-. Kupfer-Zink-Silizium-, Kupfer-Zink-Aluminium- oder Kupfer-Aluminium-Eisen-Legierung. Beispiele sind CuAl8, CuSn8, CuZn33, CuZn31Si, CuZn40Al2 oder CuAl10Fe.

Die Gleitschicht kann Wismut und/oder Silber und/oder Nickel mit einem Anteil von jeweils max. 20 Gew.-% enthalten.

Die Gleitschicht kann ferner Hartteilchen aufweisen, wobei Al₂O₃, Si₃N₄, Diamant, TiO₂ oder SiC in Frage kommen. Diese Hartteilchen können alleine oder in Kombination in der Gleitschicht enthalten sein.

Die Diffusionssperrschicht kann aus einer 1 bis 3 µm dicken Nickelschicht und einer darauf abgeschiedenen 2 bis 10 µm dicken Nickel-Zinn-Schicht bestehen. Fine weitere Variante stellt die Diffusionssperrschicht aus Kobalt dar, die ebenfalls eine Dicke von 1 - 3 µm aufweisen kann.

Das Verfahren zur Herstellung von Lagerschalen sieht vor, daß zunächst das Lagemetall aus bleifreiem Kupferwerkstoff auf Stahlband aufgegossen wird, wobei je nach Benetzbarkeit der Lagermetallschmelze zum Stahlband Benetzungsmittelschichten aus Nickel, Zinn oder Kupfer auf dem Stahlband erforderlich sein können. Solche Schichten werden stromlos, galvanisch oder im Schmelzstandverfahren hergestellt und weisen vorzugweise eine Schichtdichte von 1 bis 20µm auf.

Die Einstellung des feinkörnigen Gefüges des Lagermetalls erfolgt durch Kombination von Umform- und Wärmebehandlungsprozessen.

Nach dieser thermomechanischen Behandlung des Verbundwerkstoffes werden daraus Lagerschalen gepreßt. Die Lagerschalen werden durch stromlose chemische oder elektrochemische Verfahren mit einer Diffusionssperrschicht aus Nickel, Nickel/Nickel-Zinn oder Kobalt und einer bleifreien Gleitschicht auf Zinnbasis versehen.

Hierbei wird ein ternäres, fluoroboratfreies Glavanisierbad ohne Glanzbildner unter Zusatz von nichtionischen Netzmitteln und freier Alkylsulfonsäure sowie ein eine Carbonsäure aufweisendes Kornverfeinerungsmittel und ein Fettsäurepolyglykolester verwendet.

Speziell zur Erhöhung der Verschleißfestigkeit werden Hartstoffteilchen im Bad dispergiert. Durch Zugabe geeigneter Netzmittel zum Bad gelingt die Kodeposition der Teilchen mit der Gleitschicht.

Die Volumenanteile des Dispersats betragen bis zu 20% wobei die Teilchengröße im Mittel ≤ 1 µm beträgt.

## Patentansprüche

1. Schichtverbundwerkstoff für Gleitlager mit einer Trägerschicht, einer Lagermetallschicht, einer Diffusionssperrschicht und einer galvanisch aufgebrachten Gleitschicht, **dadurch gekenzeichnet**,
daß die Lagermetallschicht aus einer bleifreien Kupferlegierung mit einer Kupferanteil von 50 - 95 Gew.-% besteht und
daß die Gleitschicht aus einer bleifreien, Zinn Kupfer aufweisenden Legierung besteht, wobei der Kupferanteil 3 bis 20 Gew.-% und der Zinnanteil 70-97 Gew.-% beträgt.

2. Schichtverbundwerkstoff nach Anspruch 1, **dadurch gekennzeichnet**, daß die Lagermetallschicht aus einer Kupfer-Aluminium-, Kuper-Zinn-, Kupfer-Zink-, Kupfer-Zink-Silizium-, Kupfer-Zink-Aluminium- oder Kupfer-Aluminium-Eisen-Legierung besteht.

3. Schichtverbundwerkstoff nach Anspruch 1 oder 2, **dadurch gekennzeichnet**, daß die Gleitschicht Wismut und/oder Silber und/oder Nickel mit einem Anteil von max. 20 Gew.-% enthält.

4. Schichtverbundwerkstoff nach einem der Ansprüche 1 bis 3, **dadurch gekennzeichnet**, daß die Gleitschicht als Hartteilchen Al₂O₃ und/oder Si₃N₄ und/oder Diamant und/oder TiO₂ und/oder SiC aufweist.

5. Schichtverbundwerkstoff nach einem der Ansprüche 1 bis 4, **dadurch gekennzeichnet**, daß die Diffusionssperrschicht Nickel aufweist.

6. Schichtverbundwerkstoff nach Anspruch 5, **dadurch gekennzeichnet**, daß die Diffusionssperrschicht aus einer 1 bis 3 µm dicken Nickelschicht und einer darauf abgeschiedenen 2 bis 10 µm dicken Nickel-Zinn-Schicht besteht.

7. Schichtverbundwerkstoff nach einem der Ansprüche 1 bis 6, **dadurch gekennzeichnet**, daß die Diffusionssperrschicht aus einer 1-3 µm dicken Kobaltschicht besteht.

8. Verfahren zur Herstellung von Lagerschalen,
**dadurch gekennzeichnet**,
- daß das Lagermetall aus bleifreier Kupferlegierung auf Stahlband aufgegossen wird,
- daß die Einstellung eines feinkörnigen Gefüges des Lagermetalles durch Kombination von Umform- und Wärmebehandlungprozessen erfolgt,
- daß aus dem Verbundwerkstoff Lagerschalen geformt werden,
- daß über stromlose oder elektrocheimische Abscheidung eine Diffusionssperrschicht aus Nickel, Nickel/Nickel-Zinn oder Kobalt erzeugt wird, und
- daß auf der Diffusionssperrschicht galvanisch aus einem eine bleifreie Gleitschicht auf Zinnbasis mit einer Dicke von 5 bis 20 µm abgeschieden wird, bei dem ein ternäres, fluoroboratfreies Galvanisierbad ohne Glanzbildner unter Zusatz von nichtionischen Netzmitteln und freier Alkylsulfonsäure sowie ein eine Carbonsäure aufweisendes Kornverfeinerungsmittel und ein Fettsäurepolyglykolester verwendet wird,
